Europäisches Patentamt

**European Patent Office**

**Office européen des brevets**

(19)

(11) Numéro de publication: **0 072 732**
**B1**

(12) **FASCICULE DE BREVET EUROPEEN**

(45) Date de publication du fascicule du brevet:
**16.10.85**

(21) Numéro de dépôt: **82401458.3**

(22) Date de dépôt: **03.08.82**

(51) Int. Cl.⁴: **B 62 D 5/08**

(54) **Régulateur de débit pour installation de direction assistée.**

(30) Priorité: **11.08.81 FR 8115530**

(43) Date de publication de la demande:
**23.02.83 Bulletin 83/8**

(45) Mention de la délivrance du brevet:
**16.10.85 Bulletin 85/42**

(84) Etats contractants désignés:
**DE GB IT**

(56) Documents cités:
**FR - A - 1 452 447**
**FR - A - 2 065 286**
**FR - A - 2 095 145**
**FR - A - 2 146 032**
**FR - A - 2 207 481**
**GB - A - 589 095**
**US - A - 4 216 841**

(73) Titulaire: **BENDIX France, Centre Paris Pleyel, F-93521 St-Denis Cédex 01 (FR)**

(72) Inventeur: **Kervagoret, Gilbert, 5 impasse Nobleterre, F-95100 Argenteuil (FR)**

(74) Mandataire: **Le Moenner, Gabriel et al, SERVICE BREVETS BENDIX 44, Rue François 1er, F-75008 Paris (FR)**

ACTORUM AG

**Description**

L'invention concerne un régulateur de débit pour installation hydraulique de direction assistée d'un véhicule automobile, du type comprenant un boîtier percé d'un alésage dans lequel débouchent un orifice d'entrée à relier à une source de fluide sous pression, un orifice de sortie à relier à une valve de servo-direction et un orifice d'échappement à relier à un réservoir de fluide, un piston monté dans l'alésage et définissant avec celui-ci une chambre d'entrée du côté de l'orifice d'entrée et une chambre de sortie du côté de l'orifice de sortie, un ressort interposé entre le boîtier et le piston et repoussant le piston vers la chambre d'entrée, le piston définissant avec l'orifice d'échappement un passage à section variable débouchant dans la chambre d'entrée, et le piston comportant un passage, entre la chambre d'entrée et la chambre de sortie, dans lequel est prévu un orifice calibré.

On sait que les installations de direction assistée commandées par des valves de servo-direction «à centre ouvert» doivent être alimentées à débit constant pour obtenir une force d'assistance constante pour un couple d'entrée donné.

Pour maintenir un débit hydraulique constant malgré les fluctuations de régime de la pompe, généralement entraînée par le moteur du véhicule, et malgré les fluctuations dues au fonctionnement de la valve de servo-direction, on prévoit habituellement entre la pompe et la valve un régulateur de débit.

Un régulateur classique, du type sus-mentionné, est décrit dans le document GB-A-589 095.

Le document US-A-4 216 841 décrit des systèmes de valves commandés, notamment en fonction de la vitesse du véhicule, pour la régulation du débit d'une installation de direction assistée, en mettant essentiellement en œuvre des valves modulatrices à pointeau ou à tiroir dans le circuit d'alimentation de l'installation de direction assistée provenant du régulateur de débit proprement dit.

L'objet de la présente invention est de réaliser un régulateur du type défini plus haut de telle sorte que le débit régulé puisse être modulé en fonction notamment de la vitesse du véhicule afin de faire varier corrélativement la force d'assistance, suivant un agencement simple et à fonctionnement précis.

Pour ce faire, l'invention propose un régulateur du type spécifié ci-avant, caractérisé en ce que le piston et l'alésage sont étagés et définissent entre eux une chambre pilote annulaire communiquant avec la chambre de sortie par un étranglement et communiquant par un passage avec une cavité à relier au réservoir et en ce qu'il comprend, montée dans ce passage, une valve commandée par un dispositif électromagnétique en fonction de la vitesse du véhicule.

L'invention sera maintenant décrite en se référant aux dessins annexés, dans lesquels:

la figure 1 est une vue schématique d'une installation hydraulique de direction assistée incorporant un régulateur de débit selon l'invention;

la figure 2 est une vue en coupe d'un premier mode de réalisation d'un régulateur de débit incorporé dans l'installation de la fig. 1;

la figure 3 est une vue en coupe d'un second mode de réalisation d'un régulateur de débit similaire à celui de la fig. 2.

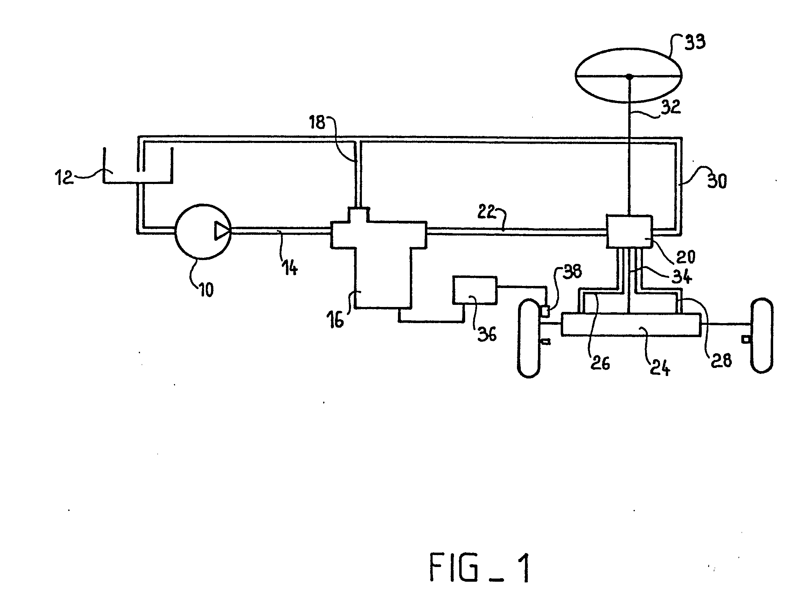

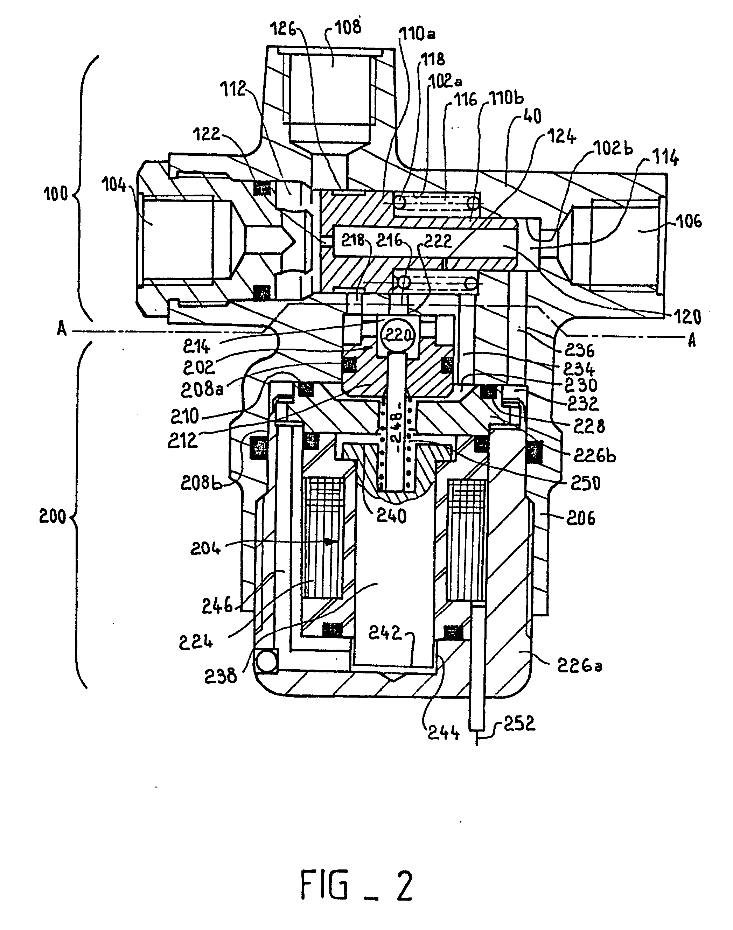

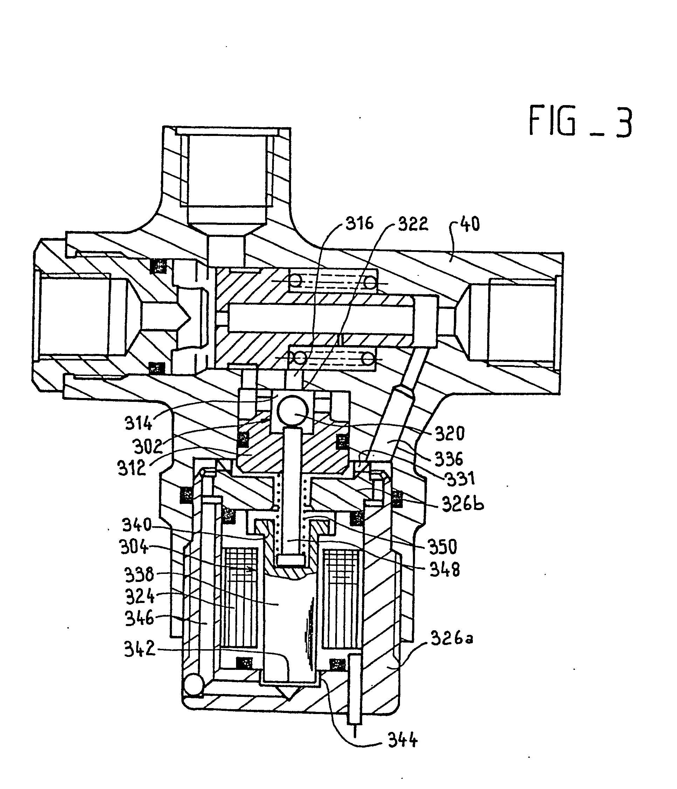

L'installation de la fig. 1 se compose comme suit: une pompe 10 aspire du liquide dans un réservoir 12 pour le refouler sous pression dans un conduit 14 relié à un régulateur de débit 16 qui fait l'objet de la présente invention et dont deux modes de réalisation seront décrits en se référant aux figures 2 et 3.

Le régulateur 16 est relié à son tour d'une part au réservoir 12 par un conduit 18 et d'autre part à une valve de servo-direction 20 par un conduit 22.

Cette valve 20 est d'un type classique à «centre ouvert» comme représenté par exemple dans la demande de brevet européen No. 0 012 043. Elle est reliée hydrauliquement aux deux chambres d'un servomoteur d'assistance, par exemple un vérin à double effet 24, par des conduits 26 et 28 et au réservoir 12 par un conduit 30. La valve 20 est commandée mécaniquement par un arbre de direction 32 solidaire d'un volant 33 et par un arbre d'entraînement 34 solidaire d'un système classique, par exemple, à pignon et crémaillère (non représenté). Enfin, le régulateur 16 est relié électriquement à un circuit de commande électronique 36, piloté par un capteur de vitesse 38, représenté ici associé à une roue du véhicule mais qui pourra être remplacé par tout dispositif générant un signal représentatif de la vitesse du véhicule.

Si l'on considère maintenant la fig. 2 qui est une vue en coupe d'un mode de réalisation du régulateur 16, on observe que celui-ci est composé principalement de deux parties: un stabilsateur de débit 100 et un variateur 200, séparés par la ligne symbolique A-A, logés dans un boîtier commun 40.

Le stabilisateur 100 est composé de la manière suivante: le boîtier 40 comprend un alésage 102 ayant une partie de grand diamètre 102a et une partie de petit diamètre 102b. Un orifice d'entrée 104, relié par le conduit 14 à la pompe 10, débouche à l'extrémité de la partie d'alésage 102a; un orifice de sortie 106, relié par le conduit 22 à la valve 20, débouche à l'extrémité de la partie d'alésage 102b; et un orifice d'échappement 108, relié par le conduit 18 au réservoir 12, débouche dans la paroi de la partie d'alésage 102a.

Un piston étagé 110, constitué d'une partie de grand diamétre 110a et d'une partie de petit diamètre 110b, est monté coulissant dans l'alésage 102, et définit avec ce dernier une chambre d'entrée 112 du côté de l'orifice d'entrée 104, une chambre de sortie 114 du côté de l'orifice de sortie 106, et une chambre pilote annulaire 116 entre la partie d'alésage 102a et la partie de piston 110b. Un ressort 118 logé dans cette chambre pilote, rappelle le piston 110 en direction de l'orifice d'entrée 104.

Le piston 110 est traversé par un passage axial 120 dans lequel est défini un orifice calibré 122, et un étranglement 124, de plus faible section que l'orifice 122, relie le passage 120 et la chambre pilote 116, donc par conséquent la chambre de sortie 114 et la chambre pilote 116.

On remarque que la partie de piston 110a coopère avec l'orifice d'échappement 108 pour définir un passage à section variable comme il sera vu lors de la description du fonctionnement de l'appareil. Enfin, la partie de piston 110a comporte une gorge périphérique 126, en communication avec l'orifice d'échappement 108 et dont le rôle apparaîtra lors de la description du variateur 200.

Le stabilisateur ainsi décrit fonctionne de la manière suivante: le fluide provenant de la pompe 10 pénètre dans la chambre d'entrée 112; une partie de ce fluide s'écoule au travers du piston 110 jusqu'à la chambre de sortie 114 via l'orifice calibré 122. Ce dernier créant une perte de charge dans l'écoulement, il s'établit une pression inférieure Ps dans la chambre de sortie 114, ainsi que dans la chambre annulaire 116 via l'étranglement 124. Le piston 110 se déplace à l'encontre du ressort 118 en démasquant l'orifice d'échappement 108 pour divertir une partie du fluide directement de la pompe vers le réservoir. De la sorte, le débit de fluide q s'écoulant au travers de l'orifice 122 vers la valve de servodirection 20 reste constant.

En effet, si l'on appelle s la section de l'orifice 122, la relation entre le débit q qui le traverse, la section s et les pressions Pe et Ps régnant de part et d'autre de l'orifice s'exprime:

$$q = Ks \sqrt{Pe - Ps} \qquad \text{(K constante)} \qquad (1)$$

d'autre part, si l'on appelle R la force du ressort 118, $S_1$ la section du piston 110 dans la chambre de sortie 114 et $S_2$ la section du piston dans la chambre pilote 116, l'équilibre du piston s'écrit:

$$R = (Pe - Ps)(S_1 + S_2) \qquad (2)$$

d'où

$$q = Ks \sqrt{\frac{R}{S_1 + S_2}} \qquad (3)$$

et l'on remarque que le débit q reste sensiblement constant quelles que soient les variations de régime de la pompe 10 ou de la valve de servodirection 20, le piston 110 démasquant plus ou moins l'orifice d'échappement 108 pour maintenir une différence constante entre Pe et Ps.

Le variateur 200 est essentiellement constitué par une valve 202 et un dispositif de commande électromagnétique 204, logés dans une extension tubulaire 206 du boîtier 40.

L'extension tubulaire 206 comprend un alésage 208 sensiblement perpendiculaire à l'alésage 102 du stabilisateur et formé d'une partie de petit diamètre 208a au voisinage du stabilisateur et d'une partie de grand diamètre 208b ouvrant à l'extrémité de l'extension tubulaire 206, ces deux parties d'alésages étant séparées par un épaulement 210.

Un insert 212 formant paroi est monté de manière étanche dans la partie d'alésage 208a et définit avec cette dernière une cavité 214 reliée par deux passages à lalésage 102a: un premier passage 216, situé dans l'axe de l'alésage 208 et ouvrant dans la chambre pilote 116, et un second passage 218, ouvrant au niveau de la gorge périphérique 126 du piston 110. De la sorte, la cavité 214 est constamment mise en communication avec le réservoir 12.

La valve 202 comprend un élément de fermeture en forme d'une bille 220 logée dans la cavité 214 et un siège 222 défini à l'extrémité du premier passage 216.

Le dispositif de commande électromagnétique 204 comprend un bobinage cylindrique 224 fixé de manière étanche dans une carcasse en matériau ferromagnétique 226, constituée d'une cuvette 226a et d'une plaque d'extrémité 226b sertie à l'extrémité de la cuvette 226a.

La cuvette 226a est montée de manière étanche dans la partie d'alésage 208b et la plaque d'extrémité 226b comporte un joint frontal 228 appliqué sur l'épaulement 210. De la sorte se trouvent définies deux chambres 230 et 232; la première, à l'intérieur du joint 228, étant reliée par un passage 234 à la chambre pilote 116 et la seconde, à l'extérieur du joint 228, étant reliée par un passage 236 à la chambre de sortie 114.

A l'intérieur du bobinage 224 coulisse un noyau cylindrique 238 dont une extrémité 240 se projette dans la chambre 230 et dont l'autre extrémité 242 se projette dans un perçage 244 de la cuvette 226a, relié à la chambre 232 par un passage 246 ménagé dans l'épaisseur de la cuvette 226.

Un poussoir 248 est interposé entre le noyau 238 et la bille 220, en traversant une ouverture de l'insert 212, et un ressort 250 est interposé entre l'insert 212 et le noyau 238.

Enfin, le bobinage 224 est alimenté électriquement grâce à des fils conducteurs 252 traversant la cuvette 226a et reliés au circuit de commande électronique 36. De la sorte, le bobinage 224 exerce sur le noyau 238, et par conséquent sur le poussoir 248, une force magnétique opposée à celle du ressort 250 et d'amplitude variable en fonction de l'intensité électrique délivrée par le circuit 36. Pour des raisons qui deviendront évidentes, le circuit 36 délivre une intensité qui est une fonction inverse de la vitesse du véhicule, telle que détectée par le capteur 38.

Le variateur 200 influe sur le fonctionnement du stabilisateur 100 de la manière suivante:

Lorsque la vitesse du véhicule V est inférieure à une valeur donnée $V_o$, le circuit 36 délivre une intensité elevée telle que la force magnétique F exercée sur le noyau 238 est supérieure à la force f du ressort 250 et la valve 202 est maintenue fermée par le poussoir 248. Le fonctionnement du stabilisateur 100 est identique à celui qui a déjà été décrit et le débit traversant l'orifice de sortie reste égal à une valeur donnée $q_o$.

Lorsque la vitesse du véhicule dépasse la vitesse $V_o$, le circuit 36 délivre une intensité plus faible, telle que la force magnétique F exercée sur le noyau 238 est inférieure à la force f du ressort 250. Dans ces conditions, la valve 202 est susceptible de s'ouvrir et se refermer de manière répétée pour moduler la pression Pp régnant dans la chambre pilote 116, les équations de fonctionnement de l'ensemble s'écrivant:

- équation de débit à travers l'étranglement 124:

$$q' = Ks' \sqrt{Ps - Pp} \qquad (4)$$

dans laquelle s' représente la section de l'étranglement 124, cette section étant très inférieure à la section de l'orifice calibré 122, le débit dévié q' est également très inférieur au débit q traversant l'orifice de sortie 114.

- équation de débit à travers l'orifice calibré 122:

dans le même temps, on remarque que la pression Pp est inférieure à la pression Ps et que le piston 110 se déplace vers la chambre de sortie 114 en démasquant un peu plus l'orifice d'échappement 108, ce qui provoque une baisse de la pression Pe régnant dans la chambre d'entrée 122. Le débit traversant l'orifice 122 s'écrit:

$$q = Ks \sqrt{Pe - Ps} \qquad (5)$$

- équation d'équilibre du piston 110:

$$Pe(S_1 + S_2) = R + PsS_1 + PpS_2$$

qui s'écrit encore:

$$Pe - Ps = \frac{R - (Ps - Pp)S_2}{S_1 + S_2} \qquad (6)$$

- équation d'équilibre de la valve 202 et du noyau 238:

la bille de valve 220, de section a, est soumise à la pression Pp, tandis que le poussoir 248, également de section a, est soumis à la même pression Pp en sens inverse. La valve 202 est donc équilibrée.

Par contre, le noyau 238, de section A, a pour équation d'équilibre:

$$F + Ps.A = f + Pp.A$$

d'où

$$Ps - Pp = \frac{f - F}{A} \qquad (7)$$

Cette relation (7) combinée avec la précédente (6) permet d'écrire:

$$Pe - Ps = \frac{R - \frac{f - F}{A} S_2}{S_1 + S_2}$$

ou

$$Pe - Ps = \frac{R.A - (f - F)S_2}{(S_1 + S_2)A} \qquad (8)$$

et cette relation (8) combinée avec la relation (5) entraîne:

$$q = Ks \sqrt{\frac{R.A - (f - F)S_2}{(S_1 + S_2)A}} \qquad (9)$$

On constate donc que le débit q est fonction de la force F exercée par le bobinage 224 sur le noyau 238. Dans le même temps, si l'on considère que la force d'assistance FA fournie par le vérin 24 est égale au produit de la section B du vérin par la différence dP entre les pressions dans les deux chambres du vérin, soit:

$$FA = B.dP$$

et que la valve de servodirection 20 établit une relation proportionnelle entre cette différence de pression dP et le carré du débit q qui provient du régulateur 16 soit

$$dP = c.q^2$$

On a donc:

$$FA = B.c.q^2 \qquad (10)$$

ou encore si l'on tient compte de la relation (9):

$$FA = B.c.K^2s^2. \frac{R.A - (f - F)S_2}{A(S_1 + S_2)} \qquad (11)$$

qui peut se mettre sous la forme (12):

$$FA = \alpha(\beta + F) \qquad (12)$$

qui met en évidence une relation linéaire entre la force d'assistance du vérin et la force magnétique du noyau 238.

Le circuit de commande électronique 36 délivre au bobinage 224 une intensité telle que la force magnétique F soit une fonction décroissante de la vitesse V du véhicule, symbolisée par la relation F = g(V); d'où:

$$FA = \alpha[\beta + g(V)] \qquad (13)$$

qui exprime que la force d'assistance est également une fonctin décroissante de la vitesse du véhicule.

Si g(V) est une relation de type linéaire, il en est de même de la relation (13) mais on pourra prévoir un circuit électronique 36 qui établisse une relation décroissante non linéaire entre la vitesse du véhicule et l'intensité délivrée au bobinage, selon le résultat souhaité pour la relation globale (13).

On notera que si le circuit de commande électronique 36 tombe en panne, l'intensité délivrée et donc la force magnétique F restent nulles et la force d'assistance prend sa valeur minimale [équation (12)], représentant ainsi un élément de sécurité complémentaire.

Si l'on considère maintenant la fig. 3, on constate que le mode de réalisation du régulateur 16 diffère assez peu de celui représenté à la fig. 2, notamment le stabilisateur 100 s'y retrouve de manière identique. Quant au variateur, il comporte un certain nombre d'éléments communs qui seront désignés par les mêmes numéros de référence, augmentés de la valeur 100.

Dans cet appareil, le joint frontal 228 de la plaque d'extrémité 326b est supprimé et les deux chambres 330 et 332 ne forment plus qu'une chambre unique 331, mise en communication par le passage 336 avec la chambre de sortie 114, le passage 234 vers la chambre pilote 116 étant supprimé. Le ressort 350 porte sur le poussoir 348 au lieu du plongeur 338.

Les équations de fonctionnement de cet appareil diffèrent peu de celles qui ont déjà été énoncées.

En particulier, les équations de fonctionnement du stabilisateur sont identiques aux équations (1), (2) et (3). L'équation (4) de débit à travers l'étranglement 124, l'équation (5) de débit à travers l'orifice 122 et l'équation (6) d'équilibre du piston 110 restent également inchangées.

Par contre, les équations d'équilibre de la valve 302 et du noyau 338 sont modifiées comme suit:

Le noyau 338, de section A, est soumis à ses deux extrémités à la pression Ps et donc équilibré vis-àvis de la pression. Par contre ce noyau transmet au poussoir 348 la force magnétique F' engendrée par le bobinage 324. L'équation d'équilibre de l'ensemble poussoir 348 et bille 320 s'écrit alors, f' étant la force du ressort 350:

$$Pp.a + f' = Ps.a + F'$$

soit

$$Ps - Pp = \frac{f' - F'}{a} \qquad (7')$$

Si l'on compare cette équation à l'équation précédente (7), on constate que, la section a du poussoir 348 étant inférieure à la section A du noyau 338, on pourra obtenir grâce à ce second mode de réalisation une même pression de sortie Ps avec des forces f' et F' plus faibles donc avec un ressort 350 et un ensemble de commande électromagnétique 304 de plus petites dimensions, d'où un gain de poids et de place, ainsi qu'une économie au niveau du circuit électronique 36 puisque celui-ci doit alors alimenter un bobinage de plus petite taille.

Dans une variante, non représentée, de ce second mode de réalisation, la chambre 331 est mise en communication avec la face opposée 342 du noyau 338 par un passage ménagé dans le noyau lui-même, ou encore en prévoyant un certain jeu autour du noyau.

Dans la description des deux modes de réalisation, il a été supposé que l'alimentation du bobinage se fait avec une intensité continue variable en fonction inverse de la vitesse du véhicule. Selon une variante, il est possible de prévoir une alimentation par impulsions d'amplitude et de fréquence constantes mais dont la durée varie en fonction inverse de la vitesse du véhicule. Une telle disposition permettra avantageusement d'éviter les risques de «collage» magnétique entre le noyau et la carcasse.

Dans le cas du régulateur de la fig. 2, on remarquera également qu'il n'est pas besoin de prévoir de ressort pour assurer la réouverture de la valve 202. En effet, lorsque la bille 220 vient au contact du siège 222, elle provoque un léger écrasement de ce dernier. La section du siège est donc en toutes circonstances légèrement supérieure à celle du poussoir 248 de sorte que même s'il règne de part et d'autre une même pression Pp, la bille 220 peut se décoller du siège 222.

Dans le cas régulateur de la fig. 3, ce problème ne se pose pas puisque le ressort 350 prend appui directement sur le poussoir 348 et permet de provoquer la réouverture de la valve même lorsque Pp est inférieure à Ps. On conçoit que ce montage du ressort entre l'insert et le poussoir peut également être adopté dans le régulateur de la fig. 2.

## Revendications

1. Régulateur de débit pour installation de direction assistée d'un véhicule automobile, comprenant: un boîtier (40) percé d'un alésage (102) dans lequel débouchent un orifice d'entrée (104) à relier à une source de fluide sous pression (10), un orifice de sortie (106) à relier à une valve de servodirection (20), et un orificed'échappement (108) à relier à réservoir de fluide (12); un piston (110) monté dans l'alésage (102) et définissant avec ce dernier une chambre d'entrée (112) du côté de l'orifice d'entrée (104) et une chambre de sortie (114) du côté de l'orifice de sortie (106); un ressort (118) interposé entre le boîtier (40) et le piston (110) et repoussant ce dernier vers la chambre d'entrée (112), le piston (110) définissant avec l'orifice d'échappement (108) un passage à section variable débouchant dans la chambre d'entrée (112), et le piston comportant un passage (120) entre la chambre d'entrée (112) et la chambre de sortie (114), dans lequel est prévu un orifice calibré (122), caractérisé en ce que le piston (110) et l'alésage (102) sont étagés et définissent entre eux une chambre pilote annulaire (116) communiquant avec la chambre de sortie (114) par un étranglement (124) et communiquant par un passage (216) avec une cavité (214) à relier audit réservoir (12), et en ce qu'il comprend, montée dans le passage (216, 316), une valve (202, 302) commandée par un dispositif électromagnétique (204, 304) en fonction de la vitesse du véhicule.

2. Régulateur selon la revendication 1, caractérisé en ce que le dispositif de commande électromagnétique (204, 304) comprend un bobinage (224, 234) reçu dans une carcasse métallique (226, 326) et dans lequel coulisse un noyau (238, 338), la valve (202, 302) comprenant un élément de fermeture (220, 320) reçu dans ladite cavité (214, 314) et un siège (222, 322) défini dans le passage (216, 316), un poussoir (248, 348) étant interposé entre le noyau (238, 338) et l'élément de fermeture (220, 320).

3. Régulateur selon la revendication 2, caractérisé en ce qu'il comprend des moyens élastiques (250, 350) entre le boîtier (40) et le noyau (238, 338) sollicitant ce dernier en éloignement de l'élément de fermeture (220, 320).

4. Régulateur selon la revendication 3, caractérisé en ce que les moyens élastiques (250, 350) prennent appui sur le poussoir (248, 348).

5. Régulateur selon l'une quelconque des revendications 2 à 4, caractérisé en ce que ledit poussoir (248, 348) est monté au travers d'une paroi (212, 312) de ladite cavité (214, 314) et a une section (a) égale à celle dudit siège (222, 322).

6. Régulateur selon la revendication 5, caractérisé en ce que celle des extrémités (242, 342) du noyau (238, 338) opposée audit poussoir (248, 348) se projette dans un perçage (244, 344) de ladite carcasse (226, 326) relié à ladite chambre de sortie (114).

7. Régulateur selon la revendication 6, caractérisé en ce que les extrémités adjacentes du noyau (238) et du poussoir (248) se projettent dans une chambre (230) reliée à ladite chambre pilote (116).

8. Régulateur selon la revendication 6, caractérisé en ce que les extrémités adjacentes du noyau (338) et du poussoir (348) se projettent dans une chambre (331) reliée à ladite chambre de sortie (114).

9. Régulateur selon l'une ou l'autre des revendications 7 et 8, caractérisé en ce que ledit perçage (244, 344) et ladite chambre de sortie (114) sont reliés via un passage (246, 346) ménagé dans l'épaisseur de ladite carcasse (226, 326).

10. Régulateur selon la revendication 8, caractérisé en ce que ledit perçage (344) et ladite chambre de sortie (114) sont reliés via un passage ménagé dans le noyau (338).

## Patentansprüche

1. Durchflussregler für eine Servolenkungseinrichtung eines Kraftfahrzeuges, mit einem Gehäuse (40), das mit einer Bohrung (102) versehen ist, in der eine mit einer Druckquelle (10) zu verbindende Einlassöffnung (104), eine mit einem Servolenkventil (20) zu verbindende Auslassöffnung (106) und eine mit einem Strömungsmittelreservoir (12) zu verbindende Ablassöffnung (108) münden, einem in der Bohrung (102) gelagerten Kolben 110), der mit der Bohrung auf der Seite der Einlassöffnung (104) eine Einlasskammer (112) und auf der Seite der Auslassöffnung (106) eine Auslasskammer (114) bildet, einer Feder (118), die zwischen dem Gehäuse (40) und dem Kolben (110) angeordnet ist und den letzteren in Richtung auf die Einlasskammer (112) vorspannt, wobei der Kolben (110) mit der Ablassöffnung (108) einen in der Einlasskammer (112) mündenden Kanal veränderlichen Querschnitts bildet und einen Kanal (120) zwischen der Einlasskammer (112) und der Auslasskammer (114) aufweist, in dem eine kalibrierte Öffnung (122) vorgesehen ist, dadurch gekennzeichnet, dass der Kolben (110) und die Bohrung (102) abgestuft sind und zwischen sich eine ringförmige Pilotkammer (116) bilden, die über eine Drosselstelle (124) mit der Auslasskammer (114) und über einen Kanal (216) mit einem mit dem Reservoir (12) zu verbindenden Raum (214) in Verbindung steht, und dass er ein in dem Kanal (216, 316) angeordnetes Ventil (202, 302) aufweist, das von einer elektromagnetischen Vorrichtung (204, 304) in Abhängigkeit von der Fahrzeuggeschwindigkeit gesteuert wird.

2. Regler nach Anspruch 1, dadurch gekennzeichnet, dass die elektromagnetische Steuervorrichtung (204, 304) eine in einem metallischen Körper (226, 326) aufgenommene Wicklung (224, 324) aufweist, in der ein Kern (238, 338) gleitet, wobei das Ventil (202, 302) einen in dem Raum (214, 314) angeordneten Schliesskörper (220, 320) und einen in dem Kanal (216, 316) gebildeten Ventilsitz (222, 322) aufweist, wobei zwischen dem Kern (238, 338) und dem Schliesskörper (220, 320) ein Stössel (248, 348) angeordnet ist.

3. Regler nach Anspruch 2, dadurch gekennzeichnet, dass er elastische Mittel (250, 350) zwischen dem Gehäuse (40) und dem Kern (238, 338) aufweist, die den letzteren von dem Schliesskörper (220, 320) wegdrücken.

4. Regler nach Anspruch 3, dadurch gekennzeichnet, dass die elastischen Mittel (250, 350) am Stössel (248, 348) abgestützt sind.

5. Regler nach einem der Ansprüche 2-4, dadurch gekennzeichnet, dass der Stössel (248, 348) sich durch eine Wand (212, 312) des besagten Raumes (214, 314) hindurcherstreckt und einen Querschnitt (a) hat, der gleich dem des Ventilsitzes (222, 322) ist.

6. Regler nach Anspruch 5, dadurch gekennzeichnet, dass das dem Stössel (248, 348) entgegengesetzte Ende (242, 342) des Kerns (238, 338) durch eine mit der Auslasskammer (114) verbundene Bohrung (244, 344) des Körpers (226, 326) vorsteht.

7. Regler nach Anspruch 6, dadurch gekennzeichnet, dass die benachbarten Enden des Kerns (238) und des Stössels (248) in eine mit der Pilotkammer (116) verbundene Kammer (230) vorstehen.

8. Regler nach Anspruch 6, dadurch gekennzeichnet, dass die angrenzenden Enden des Kerns (238) und des Stössels (348) in eine mit der Auslasskammer (114) verbundene Kammer (331) vorstehen.

9. Regler nach Anspruch 7 oder 8, dadurch gekennzeichnet, dass die Bohrung (244, 344) und die Auslasskammer (114) durch einen in der Wandstärke des Körpers (226, 326) gebildeten Kanal (246, 346) verbunden sind.

10. Regler nach Anspruch 8, dadurch gekennzeichnet, dass die Bohrung (344) und die Auslasskammer (114) über einen im Kern (338) gebildeten Kanal verbunden sind.

## Claims

1. A fluid flow regulator for a servo steering system of an automotive vehicle, comprising: a casing (40) provided with a bore (102) having an inlet orifice (104) to be connected to a pressure fluid source (10), an outlet orifice (106) to be connected to a servo steering valve (20), and an exhaust orifice (108) to be connected to a fluid reservoir (12), each of said orifices opening into said bore; a piston (110) mounted within the bore (102) and defining with the latter an inlet chamber (112) adjacent the inlet orifice (104) and an outlet chamber (114) adjacent the outlet orifice (106); a spring (118) interposed between the casing (40) and the piston (110) and urging the latter towards the inlet chamber (112), the piston (110) defining with the exhaust orifice (108) a passage of variable section opening into the inlet chamber (112), and the piston comprising a passage (120) between the inlet chamber (112) and the outlet chamber (114), wherein a calibrated orifice (122) is provided, characterized in that the piston (110) and the bore (102) are stepped and define between them an annular pilot chamber communicating with the outlet chamber (114) by a restriction (124) and communicating by a passage (216) with a cavity (214) to be connected to said reservoir (12), and in that it comprises a valve (202, 302) mounted in the passage (216, 316) and controlled by a solenoid device (204, 304) in response to the vehicle speed.

2. A regulator according to claim 1, characterized in that the solenoid device (204, 304) comprises a coil (224, 324) receivd in a metallic body (226, 326) with a core (238, 338) sliding therein, the valve (202, 302) comprising a valve element (220, 320) received in said cavity (214, 314) and a seat (222, 322) defined in the passage (216, 316), a push member (248, 348) being interposed between the core (238, 338) and the valve element (220, 320).

3. A regulator according to claim 2, characterized in that it comprises resilient means (250, 350) between the casing (40) and the core (238, 338) biasing the latter away from the valve element (220, 320).

4. A regulator according to claim 3, characterized in that the resilient means (250, 350) are supported against the push member (248, 348).

5. A regulator according to any of claims 1 to 4, characterized in that said push member (248, 348) is mounted through a wall (212, 312) of said cavity (214, 314) and has the same cross-section (a) as said seat (222, 322).

6. A regulator according to claim 5, characterized in that the extremity (242, 342) of the core (238, 338) which is opposite to said push member (248, 348) projects into a bore (244, 344) of said body (226, 326) connected to said outlet chamber (114).

7. A regulator according to claim 6, characterized in that the adjacent extremities of the core (238) and the push member (248) project into a chamber (230) connected to said pilot chamber (116).

8. A regulator according to claim 6, characterized in that the adjacent extremities of the core (338) and the push member (348) project into a chamber (331) connected to said outlet chamber (114).

9. A regulator according to claim 7 or claim 8, characterized in that said bore (244, 344) and said outlet chamber (114) are connected via a passage (246, 346) provided in the thickness of said body (226, 326).

10. A regulator according to claim 8, characterized in that the bore (344) and said outlet chamber (114) are connected via a passage provided in the core (338).

FIG _ 1

FIG _ 2

FIG _ 3